# EUROPÄISCHE PATENTSCHRIFT

(11) **EP 2 614 276 B1**
(45) Veröffentlichungstag und Bekanntmachung des Hinweises auf die Patenterteilung: **10.09.2014**
(21) Anmeldenummer: 11731350.2
(22) Anmeldetag: 12.07.2011
(51) Int. Cl.: F16K 1/42

(54) **VENTIL ZUM STEUERN VON FLUIDEN**
VALVE FOR CONTROLLING A FLUID
SOUPAPE DE COMMANDE D'UN FLUID

(30) Priorität: 08.09.2010 DE 102010040372
(43) Veröffentlichungstag der Anmeldung: 17.07.2013
(73) Patentinhaber: Robert Bosch GmbH, 70442 Stuttgart (DE)
(72) Erfinder: HOUIS, Nicolas, 74321 Bietigheim-Bissingen (DE)
(86) Internationale Anmeldenummer: PCT/EP2011/061858
(87) Internationale Veröffentlichungsnummer: WO 2012/031800

(56) Entgegenhaltungen:
- EP-A1- 0 543 726
- US-A- 3 658 295
- US-A- 4 337 788
- US-A1- 2004 129 915

## Beschreibung

### Stand der Technik

Die vorliegende Erfindung betrifft ein Ventil zum Steuern von Fluiden mit verbessertem Strömungsverhalten sowie eine Bremsvorrichtung mit einem derartigen Ventil.

Die US 3658295 A beschreibt einen Ventilsitzring mit einer speziellen Geometrie seiner Durchgangsöffnung, durch die die Verformung der Ventilsitzfläche durch das Ventilschließelement verringert wird.

Die EP 0543726 A1 beschreibt ein Dampfturbinenventil, bei der das Ventilschließelement an seinem unteren Umfang eine konvexe Form aufweist, wodurch ein Strömungskanalquerschnitt verändert wird, wodurch die durch Druckunterschiede aufgrund von Verwirbelungen hervorgerufenen Vibrationen beseitigt werden.

Die US 4337788 A beschreibt ein Steuerungsventil mit einer speziellen Geometrie hinter dem Ventilsitz, wodurch die Erosion an dem Ventilsitz durch das Strömungsmedium relativ gering gehalten werden kann.

Die US 2004/129915 A1 beschreibt eine Kombination eines Ventilkörpers mit einem einschraubbaren Ventilsitzring, wobei durch die besondere Ausführung der Abdichtung zwischen den beiden Teilen eine geringe Leckrate erzielt wird.

Ventile zum Steuern von Fluiden sind aus dem Stand der Technik in unterschiedlichen Ausgestaltungen bekannt. Bei aktuellen Anwendungen von Ventilen in Bremsvorrichtungen von Fahrzeugen werden 2/2-Wegeventile als Hydraulikventile eingesetzt. Hierbei muss ein gewisser

Mindestdurchfluss bei vorgegebenem Hub und vorgegebenem Differenzdruck erreicht werden. Die bekannten Ventile weisen Durchgangsöffnungen auf, welche zylindrisch ausgeführt sind. Hierbei wurde festgestellt, dass sich im Betrieb bei geöffnetem Ventil im Ventilsitz Strömungsablösungen bilden können. Diese Strömungsablösungen führen zu einer deutlichen Reduzierung des durchströmten Querschnitts, welcher vom theoretischen, geometrischen Querschnitt signifikant abweicht. Hierdurch erhöht sich jedoch der Strömungswiderstand bei geöffnetem Ventil, so dass dies zu einer Reduzierung des Durchflusses am Ventil führt. Die Ventile in derartigen Bremsvorrichtungen sollten jedoch möglichst kleinbauend und kompakt sein, um möglichst wenig Bauraum einzunehmen.

### Offenbarung der Erfindung

Das erfindungsgemäße Ventil zum Steuern von Fluiden mit den Merkmalen des Anspruchs 1 weist demgegenüber den Vorteil auf, dass bei geöffnetem Ventil eine verbesserte Strömung, insbesondere in Bereichen vor dem Ventilsitz, erhalten wird. Hierdurch kann im Vergleich mit den bisherigen Ventilen bei einem gegebenen Differenzdruck vor und nach dem Ventil sowie einem gegebenen Ventilhub ein Durchfluss durch das geöffnete Ventil erhöht werden. Dies wird erfindungsgemäß dadurch erreicht, dass eine Durchgangsöffnung eine Form aufweist, welche sich in Strömungsrichtung erweitert. Mit anderen Worten ist ein Durchmesser an einer Zuströmseite kleiner als ein Durchmesser an einer Abströmseite der Durchgangsöffnung. Hierdurch wird erreicht, dass bei geöffnetem Ventil die Strömung am Austritt aus der Durchgangsöffnung weniger stark abgelenkt wird. Hierdurch ergeben sich reduzierte Ablösungen im Ventilbereich nach dem Ventilsitz, wodurch ein tatsächlich durchströmter Querschnitt in diesem Bereich vergrößert wird und sich dadurch der Durchfluss durch das Ventil erhöht.

Die Unteransprüche zeigen bevorzugte Weiterbildungen der Erfindung.

Vorzugsweise ist die Durchgangsöffnung derart gebildet, dass sie sich in Strömungsrichtung konisch erweitert. Hierdurch kann die Durchgangsöffnung einfach hergestellt werden und weist definierte Strömungsverhältnisse auf.

Besonders bevorzugt ist ein Winkel der sich konisch erweiternden Durchgangsöffnung zu einer Parallelen einer Mittelachse des Ventils in einem Bereich zwischen 1° und 10° und liegt bevorzugt zwischen 5° und 10° und ist vorzugsweise ungefähr 7,5°.

Weiter bevorzugt ist ein Winkel eines ersten konischen Bereichs, an welchem der Ventilsitz gebildet ist, zur Mittelachse zwischen 40° und 50°, und beträgt besonders bevorzugt ungefähr 45°.

Um besonders gute Strömungsverhältnisse bei geöffnetem Ventil zu erreichen, ist vorzugsweise ein Verhältnis zwischen einem minimalen Durchmesser der Durchgangsöffnung zu einem maximalen Durchmesser der Durchgangsöffnung in einem Bereich zwischen 0,73 und 0,83 und bevorzugt in einem Bereich zwischen 0,77 und 0,79 und beträgt bevorzugt 0,78.

Für eine sichere Abdichtung des Ventils ist das Schließelement vorzugsweise derart gebildet, dass es im Schnitt eine Halbkugelform aufweist. Hierdurch weist das Ventil eine Abdichtung zwischen dem konischen Bereich des Ventilelements und dem kugelförmigen Bereich des Schließelements auf.

Weiter bevorzugt weist das Ventilelement an einer Zuströmseite unmittelbar benachbart zur Durchgangsöffnung einen zweiten konischen Bereich auf. Vorzugsweise ist dabei ein Übergang vom zweiten konischen Bereich in die Durchgangsöffnung abgerundet ausgebildet.

Vorzugsweise liegt ein Verhältnis eines maximalen Hubes zum maximalen Durchmesser der Durchgangsöffnung in einem Bereich von 0,1 bis 0,3, bevorzugt in einem Bereich von 0,14 bis 0,28, und beträgt besonders bevorzugt ungefähr 0,21.

Die Erfindung betrifft ferner eine Bremseinrichtung für Fahrzeuge, umfassend ein erfindungsgemäßes Ventil zum Steuern einer Hydraulikflüssigkeit. Die Erfindung verbessert insbesondere bei modernen Bremssicherheitssystemen, wie z.B. ESP-Systemen, die Ansprechzeiten.

### Zeichnung

Nachfolgend wird ein Ausführungsbeispiel der Erfindung unter Bezugnahme auf die begleitende Zeichnung im Detail beschrieben. In der Zeichnung ist:
- Figur 1: eine schematische Schnittansicht eines Ventils gemäß einem bevorzugten Ausführungsbeispiel der Erfindung im geöffneten Zustand,
- Figur 2: eine schematische Teil-Schnittansicht des Ventils von Figur 1 mit Darstellung der Ventildurchströmung, und
- Figur 3: ein Diagramm, welches einen Durchfluss über einen Ventilhub des Ventils darstellt.

### Bevorzugte Ausführungsform der Erfindung

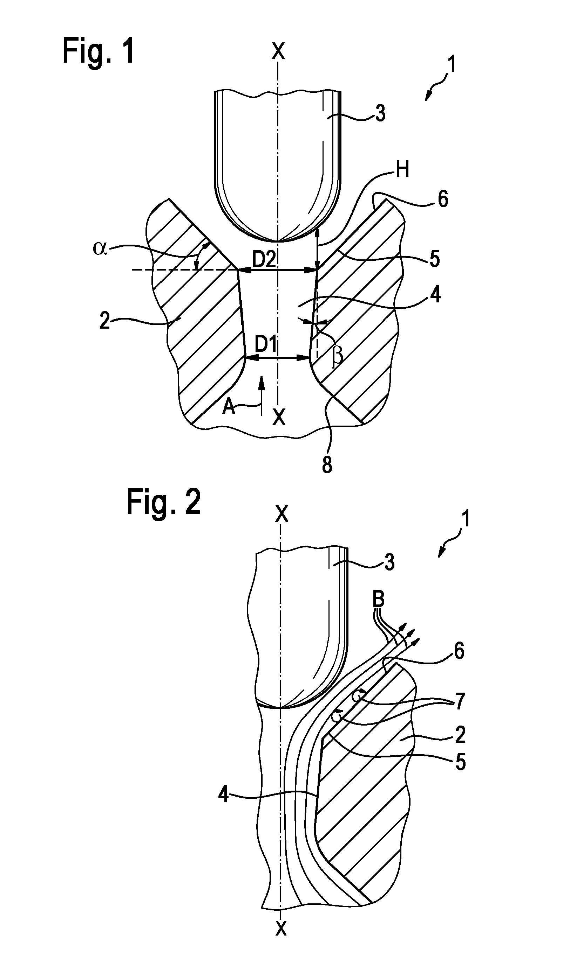

Nachfolgend wird unter Bezugnahme auf die Figuren 1 bis 3 ein Ventil 1 zum Steuern von Fluiden im Detail beschrieben. Das Ventil 1 wird in einem Bremssicherheitssystem eines Fahrzeugs als Schaltventil eingesetzt.

Wie aus Figur 1 ersichtlich ist, umfasst das Ventil 1 ein Ventilelement 2 mit einer Durchgangsöffnung 4 und einen am Ventilelement 2 gebildeten Ventilsitz 5. Der Ventilsitz 5 ist an einem ersten konischen Bereich 6 des Ventilelements gebildet. Ein Schließelement 3 weist eine halbkugelförmige Form auf und dichtet am Ventilsitz 5 ab.

Wie aus Figur 1 ersichtlich ist, weist die Durchgangsöffnung 4 eine sich in einer Durchströmungsrichtung A des Ventils 1 erweiternde Form auf. In diesem Ausführungsbeispiel erweitert sich die Durchgangsöffnung 4 konisch. Hierbei ist ein Winkel β zwischen einer Parallele zu einer Mittelachse X-X und der Durchgangsöffnung 7,5°. Ein minimaler Durchmesser D1 der Durchgangsöffnung und ein maximaler Durchmesser D2 der Durchgangsöffnung sind dabei derart gewählt, dass ein Verhältnis des minimalen Durchmessers D1 zum maximalen Durchmesser D2 0,78 beträgt. Ferner ist ein Verhältnis eines maximalen Hubes H (vollständig geöffnetes Ventil) zum Durchmesser D2 der Durchgangsöffnung ungefähr 0,21.

Wie weiter aus Figur 1 ersichtlich ist, ist an einer Zuströmseite ein zweiter konischer Bereich 8 gebildet, wobei ein Übergang zwischen dem zweiten konischen Bereich 8 in die Durchgangsöffnung 4 in abgerundeter Weise erfolgt.

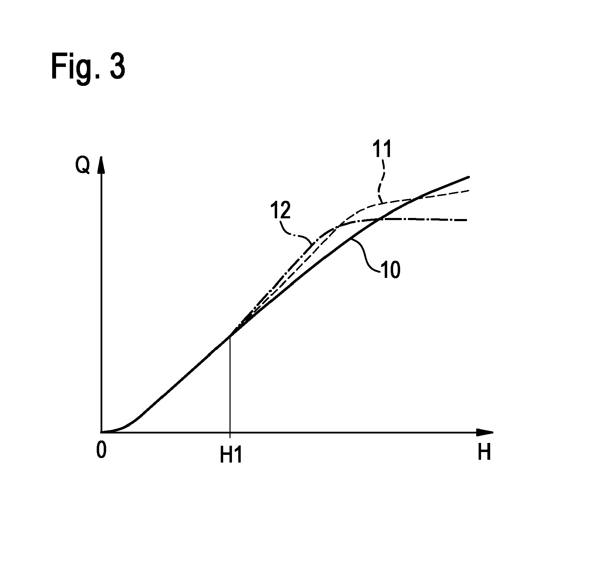

Figur 2 zeigt die Strömungsverhältnisse bei geöffnetem Ventil 1, wobei die Pfeile B die Durchströmung durch das geöffnete Ventil andeuten. Wie aus Figur 2 ersichtlich ist, ergeben sich am ersten konischen Bereich 6 zwar immer noch Ablösungen 7, welche den tatsächlichen Strömungsquerschnitt im Bereich zwischen dem ersten konischen Bereich 6 und dem Schließelement 3 reduzieren, jedoch sind diese im Vergleich mit einer zylindrischen Durchgangsöffnung signifikant reduziert. In Figur 3 sind beispielhaft drei Kurven des Durchflusses Q über dem Ventilhub H eingezeichnet. Die durchgezogene Linie 10 zeigt dabei den Durchfluss für eine zylindrische Durchgangsbohrung. Die gestrichelte Linie 11 zeigt den Durchfluss für das dargestellte Ausführungsbeispiel. Die strichpunktierte Linie 12 zeigt den Durchfluss für ein Beispiel, welches einen größeren Winkel β aufweist als bei der Linie 11. Wie aus Figur 3 deutlich wird, ist der Durchfluss durch das Ventil 1 vom Öffnen des Ventils bis zu einem bestimmten Hub H1 für alle drei gezeigten Beispiele ungefähr gleich. Ab dem Hub H1 haben die beiden Beispiele (Linie 11 und Linie 12) mit sich erweiternder Durchgangsöffnung 4 jeweils einen signifikant höheren Durchfluss bei gleichem Ventilhub, da die Ablösungen 7 im Bereich des ersten konischen Bereichs 6 deutlich reduziert sind.

Zwar wird erfindungsgemäß an der Zuströmseite durch den reduzierten Durchmesser D1 ein Strömungswiderstand an dieser Stelle erhöht. Dies wird jedoch durch den überraschend hohen positiven Effekt einer geringeren Ablösung 7 am Sitzbereich des Ventils überkompensiert. Wenn der Hub des Schließelements 3 zu groß wird, wirkt sich allerdings der negative Effekt des reduzierten Durchmessers D1 der Durchgangsöffnung wieder aus, so dass der Durchfluss für eine zylindrische Durchgangsöffnung wieder größer wird (vgl. Figur 3).

## Patentansprüche

1. Ventil zum Steuern von Fluiden, umfassend:
- ein Ventilelement (2) mit einer Durchgangsöffnung (4) und einem Ventilsitz (5), wobei der Ventilsitz (5) an einem ersten konischen Bereich (6) des Ventilelements (2) gebildet ist, und
- ein Schließelement (3), welches die Durchgangsöffnung (4) am Ventilsitz (5) freigibt und verschließt,
**dadurch gekennzeichnet, dass**
- die Durchgangsöffnung (4) eine sich in Strömungsrichtung (A) erweiternde Form aufweist, und
- die Durchgangsöffnung (4) sich in Strömungsrichtung (A) vor dem Ventilsitz (5) befindet.

2. Ventil nach Anspruch 1, **dadurch gekennzeichnet, dass** sich die Durchgangsöffnung (4) in Strömungsrichtung konisch erweitert.

3. Ventil nach Anspruch 2, **dadurch gekennzeichnet, dass** ein Winkel (β) der sich konisch erweiternden Durchgangsöffnung (4) zu einer Parallele einer Mittelachse (X-X) des Ventils in einem Bereich von 1° bis 10° liegt, vorzugsweise in einem Bereich von 5° bis 10° liegt und besonders bevorzugt ungefähr 7,5° beträgt.

4. Ventil nach einem der vorhergehenden Ansprüche, **dadurch gekennzeichnet, dass** ein Winkel (α) des ersten konischen Bereichs (6) des Ventilelements (2) zur Mittelachse (X-X) zwischen 40° und 50° liegt und vorzugsweise ungefähr 45° ist.

5. Ventil nach einem der vorhergehenden Ansprüche, **dadurch gekennzeichnet, dass** ein Verhältnis eines minimalen Durchmessers (D1) der Durchgangsöffnung (4) zu einem maximalen Durchmesser (D2) der Durchgangsöffnung (4) in einem Bereich zwischen 0,73 und 0,83 liegt, vorzugsweise zwischen 0,77 und 0,79 liegt und bevorzugt ungefähr 0,78 beträgt.

6. Ventil nach einem der vorhergehenden Ansprüche, **dadurch gekennzeichnet, dass** das Schließelement (3) eine kugelförmige Fläche zum Kontakt mit dem Ventilsitz (5) aufweist und insbesondere eine Halbkugelform aufweist.

7. Ventil nach einem der vorhergehenden Ansprüche, **dadurch gekennzeichnet, dass** das Ventilelement (2) an einer Zuströmseite unmittelbar benachbart zur Durchgangsöffnung (4) einen zweiten konischen Bereich (8) aufweist.

8. Ventil nach einem der vorhergehenden Ansprüche, **dadurch gekennzeichnet, dass** ein Verhältnis eines maximalen Hubes (H) zum maximalen Durchmesser (D2) der Durchgangsöffnung (4) in einem Bereich von 0,1 bis 0,3 liegt, bevorzugt in einem Bereich von 0,14 bis 0,28 liegt, und besonders bevorzugt ungefähr 0,21 beträgt.

9. Bremseinrichtung für ein Fahrzeug, umfassend ein Ventil nach einem der vorhergehenden Ansprüche.

## Claims

1. Valve for controlling fluids, comprising:
- a valve element (2) with a through orifice (4) and a valve seat (5), the valve seat (5) being formed on a first conical region (6) of the valve element (2), and
- a closing element (3) which releases and closes the through orifice (4) at the valve seat (5),
**characterized in that**
- the through orifice (4) has a shape widening in the flow direction (A), and
- the through orifice (4) is located upstream of the valve seat (5) in the flow direction (A).

2. Valve according to Claim 1, **characterized in that** the through orifice (4) widens conically in the flow direction.

3. Valve according to Claim 2, **characterized in that** an angle (β) of the conically widening through orifice (4) to a parallel of a mid-axis (X-X) of the valve lies in a range of 1° to 10°, preferably lies in a range of 5° to 10° and especially preferably amounts to approximately 7.5°.

4. Valve according to one of the preceding claims, **characterized in that** an angle (α) of the first conical region (6) of the valve element (2) to the mid-axis (X-X) lies between 40° and 50° and is preferably approximately 45°.

5. Valve according to one of the preceding claims, **characterized in that** a ratio of a minimum diameter (D1) of the through orifice (4) to a maximum diameter (D2) of the through orifice (4) lies in a range of between 0.73 and 0.83, preferably lies between 0.77 and 0.79 and preferably amounts to approximately 0.78.

6. Valve according to one of the preceding claims, **characterized in that** the closing element (3) has a spherical surface for contact with the valve seat (5) and, in particular, has a hemispherical shape.

7. Valve according to one of the preceding claims, **characterized in that** the valve element (2) has on an inflow side, directly adjacently to the through orifice (4), a second conical region (8).

8. Valve according to one of the preceding claims, **characterized in that** a ratio of a maximum stroke (H) to the maximum diameter (D2) of the through orifice (4) lies in a range of 0.1 to 0.3, preferably lies in a range of 0.14 to 0.28, and especially preferably amounts to approximately 0.21.

9. Braking device for a vehicle, comprising a valve according to one of the preceding claims.

## Revendications

1. Soupape de commande de fluides, comprenant :
- un élément de soupape (2) doté d'une ouverture traversante (4) et d'un siège de soupape (5), le siège de soupape (5) étant formé au niveau d'une première région conique (6) de l'élément de soupape (2) ; et
- un élément de fermeture (3) libérant et refermant l'ouverture traversante (4) au niveau du siège de soupape (5) ;
**caractérisée en ce que** :
- l'ouverture traversante (4) présente une forme s'élargissant dans le sens d'écoulement (A) ; et
- l'ouverture traversante (4) se trouve avant le siège de soupape (5) dans le sens d'écoulement (A).

2. Soupape selon la revendication 1, **caractérisée en ce que** l'ouverture traversante (4) s'élargit de façon conique dans le sens d'écoulement.

3. Soupape selon la revendication 2, **caractérisée en ce qu'**un angle (β) de l'ouverture traversante (4) s'élargissant de façon conique se situe, par rapport à une parallèle à un axe central (X-X) de la soupape, dans une plage de 1° à 10°, de préférence dans une plage allant de 5° à 10° et égale de façon particulièrement préférée approximativement 7,5°.

4. Soupape selon l'une quelconque des revendications précédentes, **caractérisée en ce qu'**un angle (α) de la première région conique (6) de l'élément de soupape (2) se situe entre 40° et 50° par rapport à l'axe central (X-X) et égale de préférence approximativement 45°.

5. Soupape selon l'une quelconque des revendications précédentes, **caractérisée en ce qu'**un rapport d'un diamètre minimal (D1) de l'ouverture traversante (4) sur un diamètre maximal (D2) de l'ouverture traversante (4) se situe dans une plage comprise entre 0,73 et 0,83, de préférence entre 0,77 et 0,79 et égale de façon préférée approximativement 0,78.

6. Soupape selon l'une quelconque des revendications précédentes, **caractérisée en ce que** l'élément de fermeture (3) comporte une surface de forme sphérique pour établir le contact avec le siège de soupape (5) et prend notamment une forme hémisphérique.

7. Soupape selon l'une quelconque des revendications précédentes, **caractérisée en ce que** l'élément de soupape (2) comporte une deuxième région conique (8) au niveau d'un côté d'amenée placé à proximité immédiate de l'ouverture traversante (4).

8. Soupape selon l'une quelconque des revendications précédentes, **caractérisée en ce qu'**un rapport entre une course maximale (H) sur un diamètre maximal (D2) de l'ouverture traversante (4) se situe dans une plage allant de 0,1 à 0,3, de façon préférée dans une plage allant de 0,14 à 0,28 et égale de façon particulièrement préférée approximativement 0,21.

9. Dispositif de freinage pour un véhicule, comprenant une soupape selon l'une quelconque des revendications précédentes.
